(19) **Europäisches Patentamt**
**European Patent Office**
**Office européen des brevets**

(11) **EP 3 372 394 B1**

(12) **EUROPEAN PATENT SPECIFICATION**

(45) Date of publication and mention
of the grant of the patent:
**15.12.2021 Bulletin 2021/50**

(21) Application number: **18160565.0**

(22) Date of filing: **07.03.2018**

(51) Int Cl.:
*B29D 23/18* (2006.01)   *F16L 11/15* (2006.01)
*E03F 3/04* (2006.01)   *E03F 1/00* (2006.01)
*E03F 3/02* (2006.01)   *F16D 7/02* (2006.01)
*F16D 7/04* (2006.01)   *B29C 48/13* (2019.01)
*E03F 5/02* (2006.01)

(54) **FLEXIBLE DRAINAGE SYSTEM FOR WASTEWATER CONTAINING HYDROCARBON**

FLEXIBLES ABFLUSSSYSTEM FÜR ABWASSER MIT KOHLENWASSERSTOFF

SYSTÈME DE DRAINAGE FLEXIBLE POUR EAU RÉSIDUAIRE CONTENANT HYDROCARBURES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **07.03.2017 BE 201705141**

(43) Date of publication of application:
**12.09.2018 Bulletin 2018/37**

(73) Proprietor: **DE MIL, Geert
9420 Erpe-Mere (BE)**

(72) Inventor: **DE MIL, Geert
9420 Erpe-Mere (BE)**

(74) Representative: **Brantsandpatents bvba
Pauline Van Pottelsberghelaan 24
9051 Ghent (BE)**

(56) References cited:
**EP-A1- 0 648 901      EP-A1- 1 103 752
DE-U1- 29 920 148      FR-A- 1 405 229**

## Description

## TECHNICAL FIELD

The invention relates to an improved drainage system, in particular for the disposal of hydrocarbon-containing wastewater, such as at petrol stations where petrol and diesel residues end up in ground water and rain and can thus lead to soil pollution if not properly disposed of. Furthermore, the invention concerns a kit for the installation of such a drainage system and a method for its installation.

## PRIOR ART

In installations where hydrocarbon-containing chemical products are used in a nonspecialised setting (lab), the risk of contamination is high, partly because of the often high flow rate of the products when used, the use of untrained personnel (e.g. car drivers who refuel themselves), and generally limited safety measures to reduce costs. Thus, at petrol stations and the like, relatively large quantities of diesel and petrol are unintentionally released (for example, dripping nozzle of petrol pump, overflowing petrol tank and others) in the vicinity, and end up on the ground, typically a solid substrate (concrete) of the petrol station. These residues mix with water and/or rain water and thus run the risk of ending up in nature and contaminating the soil or soil water. Not only can this lead to mandatory (expensive) soil remediation, but it can also entail risks to public health and fines. For these reasons, such stations are built with a slight slope to allow the hydrocarbon-containing wastewater to drain to a discharge channel leading to a drain mouth.

The current drainage systems consist of a network of rigid drainage pipes, mostly made of polyethylene, which are interconnected (among other things, to make bends) via specialised couplings, usually by electrofusion. However, such a system has many drawbacks. On the one hand, the maintenance is much more difficult because of these bends. They are available as standard in 45° and 90°, which means that most of the blockages will be located here. Since electrofusion couplings always cause weak spots, leakages will occur more often here during the life of the system, but also more often blockages. Moreover, these leaks are difficult to detect because of the many bends and couplings (typically, the inspection is carried out by a camera that is guided through the pipes, which becomes more difficult at bends or stoppages). In addition, it should be noted that such measures take place while the station is in operation, and inconvenience or danger to customers should be minimised by being able to carry out maintenance quickly.

In the case of ground water remediation at a petrol station, these flexible hydrocarbonresistant pipes can also be used more easily and faster than the well-known hard polyethylene pipes. The temporary nature of such a remediation requires even more rapid and easily deployable materials.

In addition, the installation and work on these systems takes a lot of time, as they always have to be tackled depending on the situation and location. During installation, the rigid pipes must be cut on-site, and then coupled, which in addition to wasting time, also causes great waste (remnants after cutting). It should also be borne in mind that large detours are used, as the pipelines often cannot or do not or take the shortest route to a collection well. Each coupling takes extra time to implement and also requires specialised equipment, which in turn increases the cost of installation or repair, but which also requires certain environmental conditions (dust-free, clean, degreased, roughened, dry, and this is not self-evident in such locations, certainly not in a yard).

Moreover, this rigid system is far from ideal in earthquake-prone regions, or regions with regular underground activity, as it regularly results in fractures. Especially in these situations, the couplings are always subjected to high stresses, which causes the leaks.

Leakages in these systems also usually cause a partial or complete shutdown of the station for repair, as there are strict safety measures in place when handling these products, which always involves high costs, and low efficiency of the station.

EP 1103752 describes a flexible plastic drainage pipe but does not provide information on the degree of flexibility, the suitability for discharging hydrocarbon-contaminated water that would enable the concept of EP '752 to provide a solution to the problem described. In addition, the choice of materials is not discussed, nor are the specific dimensions.

EP 0648901 describes a flexible drainage pipe that is again not suitable for discharging hydrocarbon-containing water. The degree of flexibility is not discussed either, as a result of which the suitability for the specific application envisaged by the applicant is questionable, certainly in view of the fact that the choice of materials does not give further reason for this, and the resistance and impermeability to hydrocarbon-containing water has not been discussed either.

FR 1405229 finally discloses a semi-flexible drainage pipe with a certain rigidity (comparable to ring stiffness). The flexibility is not quantified, nor is the resistance or impermeability of the material to hydrocarbon-containing water, which makes the concept of FR '229 unsuitable for the application of the invention.

It should be borne in mind that the above concepts are not suitable for a specific application in many cases. The processing of hydrocarbon-containing water cannot simply be carried out with a 'general' flexible pipe, as this can strongly attack the pipes, cause them to swell, and often also permeate through the walls, thus still contaminating the soil around the pipe. The invention offers a solution to this problem of soil contamination, among other things, and as such is clearly different from the above-mentioned systems.

The present invention aims to solve at least some of the problems mentioned above.

## BRIEF SUMMARY OF THE INVENTION

The invention relates to an improved drainage system for discharging hydrocarbon-contaminated wastewater, comprising one or more elongate pipes and one or more drain mouths for collecting hydrocarbon-contaminated wastewater, wherein a first end of the pipes can be connected in a liquid-tight manner to the drain mouths for discharging the hydrocarbon-contaminated wastewater, characterised in that the pipes are flexible, and that the pipes have a bend radius between 4 to 15 times the nominal diameter of the pipes, preferably between 6 and 10 times the nominal diameter of the pipes; and preferably that the pipes have a ring stiffness of at least SN 4. The pipes furthermore comprise polyamide and/or high-density polyethylenes, polyurethanes, polybutylenes, polyphenylenes, polyoxymethyls, ethylene/vinyl alcohol copolymers and/or combinations and/or copolymers of the aforementioned. The pipes have an inner diameter comprised between 70 mm and 200 mm, and a total wall thickness of at least 1 mm and at most 20 mm.

In a second aspect, the invention relates to a kit for placing a drainage system for discharging contaminated water.

In a further aspect, the invention relates to a method for placing a drainage system.

## BRIEF DESCRIPTION OF THE DRAWINGS

**Fig. 1** shows a cross-section of a bilayer wall of an embodiment of the pipe according to the invention.

**Fig. 2A** and **2B** show a cross-section of the curved wall according to Fig. 1.

**Fig. 3A** and **3B** show a floor plan of a drainage system according to an old embodiment (3A) and a drainage system according to an embodiment of the invention (3B).

**Fig. 4** shows a lateral cross-section of a connection sleeve according to an embodiment of the invention.

## DETAILED DESCRIPTION

Unless otherwise defined, all terms used in the description of the invention, including technical and scientific terms, have the meaning as commonly understood by a person skilled in the art to which the invention pertains. For a better understanding of the description of the invention, the following terms are explained explicitly.

In this document, 'a' and 'the' refer to both the singular and the plural, unless the context presupposes otherwise. For example, 'a segment' means one or more segments.

When 'approximately' or 'around' is used in this document with a measurable quantity, a parameter, a length of time or moment, and the like, then variations are meant of approx. 20% or less, preferably approx. 10% or less, more preferably approx. 5% or less, even more preferably approx. 1% or less, and even more preferably approx. 0.1% or less than and of the quoted value, insofar as such variations apply in the described invention. However, it must be understood that the value of a quantity used where the term 'approximately' or 'around' is used, is itself specifically disclosed.

The terms 'comprise', 'comprising', 'consist of', 'consisting of', 'provided with', 'have', 'having', 'include', 'including', 'contain', 'containing' are synonyms and are inclusive or open terms that indicate the presence of what follows, and which do not exclude or prevent the presence of other components, characteristics, elements, members, steps, as known from or disclosed in the prior art.

The term 'contaminated water' generally refers herein to contaminated liquids, in particular water, where the contamination mainly comes from hydrocarbons, in particular such as diesel, petrol and the like. The percentage quantity of the deviating particles which cause the contamination may, for example, be comprised between 0% and 100% (in case of leaks), in particular between 0% and 50%, more in particular between 0% and 25%.

Quoting numerical intervals by the endpoints comprises all integers, fractions and/or real numbers between the endpoints, these endpoints included.

The invention relates in a first aspect to an improved drainage system for discharging hydrocarbon-contaminated wastewater, comprising one or more elongate pipes and one or more drain mouths for collecting hydrocarbon-contaminated wastewater, wherein a first end of the pipes can be connected in a liquid-tight manner to the drain mouths for discharging the hydrocarbon-contaminated wastewater, the pipes being flexible, and the pipes having a bend radius between 4 to 15 times the nominal diameter of the pipes, preferably between 6 and 10 times the nominal diameter of the pipes. The pipes comprise polyamide and/or high-density polyethylenes, polyurethanes, polybutylenes, polyphenylenes, polyoxymethyls, ethylene/vinyl alcohol copolymers and/or combinations and/or copolymers of the aforementioned. The pipes have an inner diameter comprised between 70 mm and 200 mm, and a total wall thickness of at least 1 mm and at most 20 mm.

Preferably, the pipes shall have a ring stiffness of at least SN 4, preferably at least SN 6. Note that 'SN' refers here to the nominal stiffness (SN) of the pipe.

By making use of flexible pipes, a large number of the aforementioned problems are handily solved. The applicant noted that it was possible to use flexible pipes. Logically, the pipes comprise a material that has sufficient resistance to (water contaminated with) hydrocarbons, such as oil, traditional fuels such as petrol and diesel, as well as additives and derivatives thereof, and this requires, among other things, a low permeability value for the chemical products mentioned. As a result, the placement of the pipes can take place in a much simpler manner in a number of areas. For example, there is little need to cut on-site and no bends or (expensive) intermediate couplings need to be placed, since the flexible pipes can simply be unrolled (from a reel or a coil) from a drain mouth to a collection well and be connected there. In this way, the transport of the pipes is also easier. The flexibility or pliability of the pipes also provides sufficient play to absorb any ground shifts without leading to breakage, and also allows a more continuous path between the drain mouth and the collection well, which makes the inspection via cameras faster and easier, where existing systems typically require bends and connections with the known side effects.

In addition, it is also possible in this way to lay the pipes via a desired path under all possible angles that the site may require (in the case of unfavourable soil due to rocks or specific surfaces and the like), which would cause problems with the known rigid systems, where curves under specific angles often require specialised couplers.

The applicant further noted that a bending radius up to 15 times the nominal diameter may be sufficient to have a high flexibility and pliability in the pipes that allow reaching all possible configurations, with the advantage that the pipes still maintain a very high strength.

In special circumstances (earthquake-prone areas), one can opt for pipes that are as flexible as possible (bending radius of 4, 5, 6, 7, 8, 9, 10, 11, 12, 13, or 14 times the nominal diameter) to be able to compensate for larger ground shifts. Preferably, however, a bend radius of between 6 and 10 times the nominal diameter is used because this provides an ideal ratio between the strength of the pipe itself and flexibility.

A further preferred embodiment may include a minimum requirement for the ring stiffness. Preferably, the ring stiffness is at least SN 4, more preferably at least SN 6 or even SN 8, SN 10 or more, again depending on the specific application. This parameter indicates which pressures or forces the pipe can withstand from the outside without permanent damage or deformation. Note further that this parameter is internationally recognised and calculated using the following formula:

$$SN = \frac{F \cdot f}{L \cdot dv} = \frac{E \cdot I}{D^3} \cdot 10^6$$

In this formula, 'F' refers to the total force applied in Newton, 'L' is the length of the pipe in metres, 'dv' the diametrical distortion in meters, 'E' is the material modulus of the pipe in MPa, and 'I' is the area moment of inertia. Note that 'f' is the so-called 'ovality correction factor' and is equal to:

$$f = 10^{-5}\left(1860 + 2500\frac{dv}{D}\right)$$

Here 'D' is equal to the normal diameter of the pipe (unstressed) in metres. In most situations, a ring stiffness of SN 4 is sufficient for absorbing the forces, since the piping network is placed under one or more layers of foundation, which very strongly redistributes the load thereon.

According to a preferred embodiment, the pipes are suitable for withstanding usage temperatures of up to 60°C, preferably even higher, but in practice the usage temperature will remain limited.

The pipes will preferably have an internal pressure resistance comprised between 0.1 bar and 10 bar, more preferably between 0.2 bar and 6 bar, even more preferably between 0.3 bar and 3 bar. On the one hand, these limits provide sufficient resistance to pressure, without unnecessarily increasing the costs (given that higher pressure resistances will typically make the pipes more expensive).

The pipes will preferably have a 'standard dimension ratio' (SDR) comprised between 2 and 100, more preferably between 4 and 50 and still more preferably between 5 and 25. These limits have again been chosen to ensure a high pressure resistance on the one hand without unnecessarily increasing the costs.

In the case of previous parameters, the circumstances will often also be taken into account, namely terrain, application, budget and/or other factors.

In a preferred embodiment, the pipes will comprise an inner layer and an outer layer, wherein the inner and outer layer are obtained or produced via co-extrusion, and wherein the inner and outer layer are mutually directly bonded. The double layer provides an extra barrier that ensures water-tightness. By co-extruding the layers of the pipe at the same time, an end product is obtained in which the inner and the outer layer are strongly anchored to each other, and they will therefore not come loose during or after installation, a problem that often occurs in pipes where the extrusion does not happen simultaneously.

The applicant noted that a choice of polyamide, and specifically for polyamide 6, as material of the pipes is extremely advantageous, since this allows a very efficient (co-)extrusion, while the material has special characteristics in terms of impermeability and resistance to hydrocarbon-containing water. Note that similar statements apply to high-density polyethylenes, polyurethanes, polybutylenes, polyphenylenes, polyoxymethyls, ethylene / vinyl alcohol copolymers and/or combinations and/or copolymers of the aforementioned. It should also be noted that these materials are not described in the prior art as suitable for use in the removal of hydrocarbon-contaminated water.

Co-extrusion also offers the advantage that different materials can be used in separate layers. This makes it possible to provide certain technical characteristics that are not (or difficult) to be found in a single material (for example permeability, strength, flexibility, resistance, etc.). For example, the excellent resistance of polyamide (or specifically PA 6) to hydrocarbons can be used in combination with characteristics of a second material.

In a further preferred embodiment, the outer layer of the pipes has a ribbed or corrugated outside, while the inner layer has a substantially smooth inner side. Preferably, the ribbed or corrugated outside has a relief depth between 2 mm and 15 mm, such as 3 mm, 4 mm, 5 mm, 6 mm, 7 mm, 8 mm, 9 mm, 10 mm, 11 mm, 12 mm, 13 mm, 14 mm. More preferably, the relief depth is between 5 mm and 11 mm and even more preferably about 7 mm. Nevertheless, it is possible to provide even greater relief depths, for example 20 mm or more, 25 mm, 30 mm, if the situation so requires. The ribbed or corrugated outside ensures that the pipes can be manufactured flexibly, as well as to reinforce the pipes transversely and thus meet the necessary requirements (in terms of pressure resistance, among other things). In addition, in this way, the pipes can also be more firmly engaged with the surrounding soil materials and thus not shift undesirably, or only a little. The smooth interior ensures an optimal transport of the contaminated water. In addition, the ribbed or corrugated outside at the ends can be used for an extra mechanical anchoring of the pipe to a collection well or drain mouth. Note further that the ribbed shape can be achieved by a spiral rib running along the length (or a part of the length) of the pipe, or by ribs running around each time.

In a still further preferred embodiment, the ribs or waves on the outside are separated at a substantially fixed distance or path at mutual distances (from centre to centre). This distance is preferably comprised between 6 mm and 20 mm, more preferably between 8 mm and 15 mm, and even more preferably about 11 mm.

In a preferred embodiment, the pipes are adapted to a first longitudinal end, wherein the first end can be connected to the drain mouths via a mechanical coupling. Preferably, the pipes (at least over a specific length at the first end) have a ribbed or corrugated outside, wherein the mechanical coupling engages by clamping on this ribbed or corrugated outside. This mechanical coupling can use, among other things, one or more clamping rings and/or one or more rubber rings for sealing.

In a preferred embodiment, the drainage system further comprises one or more collection wells for receiving the contaminated water from the pipes. The collection wells are adapted here for being fluid-tightly connected to a second end of the pipes (opposite to the first end), and wherein the pipes slope downward from the drain mouths to the collection wells, the latter to provide for a natural flow to the collection wells.

In a preferred embodiment, the pipes comprise polyamide. Preferably, this is polyamide 6 or PA 6, also known as Nylon 6 or polycaprolactam. Polyamides are particularly durable and have a high strength. Moreover, this material (in varying orders of magnitude) is pliable, making it ideal for this application. Specifically, polyamide 6 is preferred because of the excellent characteristics, namely high elasticity, high resistance to a large number of chemical products (including hydrocarbons, but also many other acids and alkali), excellent tensile strength, strong abrasion resistance and other properties. Moreover, these materials can also be easily extruded, and they are inexpensively available.

In a further preferred embodiment, the drainage system may also comprise a number of connection sleeves for connecting the pipes in a liquid-tight manner to the drain mouths and/or to the collection wells. Preferably, the connection sleeves comprise polyethylene. Alternatively or additionally, the connection sleeves may also comprise polyamide, more preferably polyamide 6.

A possibility here is that, along a first side, the connection sleeves comprise the material which the pipes also comprise (for example PA 6), and that this first side of the connection sleeves is suitable for being connected to the pipes. On a second side, the connection sleeves then comprise the material of which the drain mouth (or collection well) is substantially comprised. This can be polyethylene, for example, but also cast iron, steel and/or aluminium.

Note furthermore that the connection sleeves can be adapted to be connected to a different diameter of other pipe or tube on each side, with a possible range of 40 mm to 300 mm, or even beyond. Typically, standard dimensions will be chosen, for example 40 mm, 60 mm, 80 mm, 110 mm, 140 mm, 160 mm or others.

In a preferred embodiment the pipes comprise high density polyethylenes, polypropylenes, polyvinyl chlorides, polyurethanes, polybutylenes, polyphenylenes, polyoxymethylenes, ethylene / vinyl alcohol copolymers and/or combinations and/or copolymers of the aforementioned. Note that this may or may not be in combination with the presence of polyamide (whether or not polyamide 6) as material comprising the walls of the pipes. Again, the drainage system may comprise connection sleeves, these connection sleeves comprising the aforementioned materials.

Note that for each of the above-mentioned materials, it was noted that they show a very high impermeability for hydrocarbon-containing liquids during testing, which greatly enhances their suitability for the application of the invention. Unlike known systems, this ensures sufficient flexibility while ensuring that the hydrocarbon-containing water does not end up in the soil. In addition, the choice of materials also makes it possible to reduce wall thickness, thereby maintaining or even improving the impermeability (to hydrocarbons) compared to known systems, which means that the pipes are flexible and at the same time also economically interesting because less material is required for their manufacture.

Generally, whether or not accompanied by a choice of material as described above, the permeability of the pipe in a preferred embodiment is a maximum of 100 millidarcy (100 mD or $10^{-1}$ D), preferably a maximum of 10 mD, more preferably a maximum of 1 mD, even more preferably 0.1 mD, and even further preferably a maximum of 0.01 mD or even a maximum of 0.001 mD (1 $\mu$D). It should of course be understood that even lower values are further preferable, for example a maximum of 0.1 $\mu$D or 0.01 $\mu$D or 1 nD. By choosing such an impermeable *and* flexible material, the existing problems can be solved uniquely. Where in the prior art it was opted for high thicknesses of the pipes to avoid leakage, this however made it difficult to manipulate resources, which causes problems with placement, replacement and inspection, as discussed earlier. In addition, the applicant noticed that despite the thicker walls that were used, they were still strongly impregnated with the liquid to be transported, and as a result the surrounding soil would eventually become contaminated. The present invention avoids this by an increased impermeability (reduced permeability), specifically to hydrocarbon-containing water, which means the thickness can be limited and thus guarantee the necessary flexibility, while at the same time reducing the cost, both by saving material through the thinner walls as well as the shorter path lengths of pipes that are needed to form a particular configuration (or need for specific couplings to allow certain angles).

In a preferred embodiment, the pipes comprise an inner layer and an outer layer, preferably being adhered to each other. The inner layer here has a thickness comprised between 0.3 mm and 1.5 mm, preferably between 0.6 mm and 1.1 mm, and more preferably between 0.7 mm and 0.9 mm. The outer layer here has a thickness comprised between 0.3 mm and 1.5 mm, preferably between 0.6 mm and 1.1 mm, and more preferably between 0.7 mm and 0.9 mm. Note that these thicknesses do not necessarily have to be the same. Higher thicknesses, for example 2 mm, 2.5 mm, 3 mm, and more, are also possible, depending on the precise conditions.

According to the invention, the pipe has a total wall thickness comprised between 1 mm and 20 mm, for example lying in a range with as upper or lower limit 2 mm, 3 mm, 4 mm, 5 mm, 6 mm, 7 mm, 8 mm, 9 mm, 10 mm, 12 mm, 14 mm, 16 mm, 18 mm.

The applicant noted that among the ranges of thicknesses mentioned, the pipes provided the desired flexibility, while still maintaining sufficient strength to withstand pressure and forces from outside without breakage. In addition, it is also necessary to provide a certain lower limit of thickness to minimise the permeability of the pipes. The chosen preferred range for the thicknesses of the layers provides an optimum ratio of strength, impermeability to hydrocarbon-containing wastewater, flexibility, and weight and cost.

According to the invention, the pipes have an inner diameter comprised between 70 mm and 200 mm. In practice, the range is often limited to a number of standardised dimensions (in terms of inside diameter), among other things for easy connection. The applicant noted in particular that inner diameters comprised between 80 mm and 100 mm, preferably around 90 mm; inner diameters comprised between 100 mm and 120 mm, preferably about 110 mm; and inner diameters comprised between 150 mm and 170 mm, preferably about 160 mm, are particularly suitable for these systems. This is achieved, among other things, by an optimisation of the possible flow, limiting costs and connectivity to other systems.

In a preferred embodiment, the pipes are connected via a mechanical coupling to the drain mouths via connection sleeves (to a discharge pipe of the drain mouth). Preferably, this should further be done with the aid of rubber seals and/or clamping rings (for mechanical compression and such anchoring). It is possible here that the connection sleeves comprise polyethylene (and/or polyamide, preferably polyamide 6 (PA 6)). The advantages of this last material choice have been discussed earlier.

The applicant noted that in the known drainage systems, ordinary polyethylene pipes are often used, which are then connected to a connecting network via electrofusion couplings. However, the use of electrofusion couplings at a large number of points is not recommended. First of all, this results in a higher cost as specialised equipment has to be provided and this also results in an additional cost in working hours for the installation of the couplings, and the conditioning of the pipes and the couplings. In addition, in the case of electrofusion couplings, there is also the need for a relatively sterile environment, which is not always the case in a construction project (moreover, it is also weather-dependent, given the dry conditions that are required), and therefore causes delays and additional costs. Finally, the presence of the electrofusion couplings in the case of the known systems is also a weakness in view of the rigid pipes. Shifts will put too much pressure on the couplings, leading to leaks or even complete rupture, with the associated soil contamination.

For the above reasons and others, the proposed drainage system uses a mechanical coupling between pipes and the drain mouth in order to make the coupling easier, cheaper and quicker to carry out. In addition, it should also be understood that by using flexible pipes, these can lead from the drain mouth to a collection well in a single path (without interconnections in between) (known systems connect multiple straight pieces of pipe to each other via electrofusion, and then to the drain mouth and collection well).

In a preferred embodiment, the pipes have a weight comprised between 500 g/m and 2000 g/m, preferably between 750 g/m and 1500 g/m, more preferably between 850 g/m and 1250 g/m, and still more preferably comprises between 900 g/m and 1000 g/m. This is to optimise the costs per running metre and the possible strength of the pipes.

In a preferred embodiment, the pipes have a high resistance to AdBlue (AUS32), a substance that is often added with diesel vehicles and so often comes into circulation in contaminated water at petrol stations and the like. This resistance is at least present on the inside of the pipes.

In a preferred embodiment, the pipes have an impact resistance comprised between 40 J and 150 J in a fall from 193 cm. Preferably, this impact resistance is comprised between 45 J and 100 J, still more preferably 50 J and 85 J.

In a preferred embodiment, the pipes have a high resistance to corrosion, and preferably the pipes are corrosion-resistant on the inside.

In a preferred embodiment, the drainage system is adapted for use in groundwater remediation, possibly where an oleophilic material can be used to remove hydrocarbons by absorbing them. Preferably, this material is also hydrophobic and ensures that the absorbed hydrocarbons are no longer flammable, once fully bound.

In a preferred embodiment the pipes are resistant to UV degradation. This can be done by a number of measures (including the addition of anti-UV substances to pipe material, such as UV stabilisers).

In a preferred embodiment, the drainage system comprises one or more hydrocarbon separators, and optionally one or more grease separators and/or other purification installations.

In a second aspect, the invention relates to a kit for placing a drainage system for discharging hydrocarbon-contaminated wastewater (for example from petrol stations). This kit comprises one or more flexible pipes and one or more drain mouths, the pipes comprising an inner layer and an outer layer which can be obtained via coextrusion, with the inner and the outer layer being directly bonded to each other, with the outer layer of the pipes having a ribbed or corrugated outside, and the inner layer of the pipes having a substantially smooth inside and the pipes comprising polyamide, preferably polyamide 6 (PA 6), and where the drain mouths are suitable for collecting hydrocarbon-contaminated wastewater, where a first end of the pipes and the drain mouths are adapted to be connected to each other in a liquid-tight manner for discharging the wastewater from the drain mouths through the pipes, further optionally comprising one or more connection sleeves for engaging the ribbed or corrugated outside of the pipes and the liquid-tight connecting of the first ends of the pipes to the drain mouths via a mechanical coupling, where the flexible pipes are pipes as being part of the drainage system according to the first aspect of the invention.

Preferably, the kit further comprises one or more collection wells adapted to being liquid-tightly connected to a second end of the pipes for discharging the hydrocarbon-contaminated wastewater from the pipes to the collection well.

The advantages of the kit as described above follow logically from the aforementioned advantages of the drainage system itself, which have already been discussed extensively in this document.

In a third aspect, the invention relates to a method for installing a drainage system for discharging hydrocarbon-contaminated wastewater in petrol stations, industrial estates and/or fuel depots, said drainage system being installed in conjunction with a hydrocarbon separator. The drainage system comprises one or more flexible pipes and one or more drain mouths, the pipes comprising an inner layer and an outer layer which can be obtained via coextrusion, with the inner and the outer layer being directly bonded to each other, with the outer layer of the pipes having a ribbed or corrugated outside, and the inner layer of the pipes having a substantially smooth inside and the pipes comprising polyamide, preferably polyamide 6 (PA 6), and where the drain mouths are suitable for collecting hydrocarbon-contaminated wastewater, where a first end of the pipes and the drain mouths are adapted to be connected to each other in a liquid-tight manner for discharging the wastewater from the drain mouths through the pipes, and wherein the pipes are pipes as being part of the drainage system according to the first aspect of the invention. The method comprises the following steps:

　　　a. placing the drain mouths in excavated soil;
　　　b. placing the flexible pipes in the excavated soil, the flexible pipes extending from the drain mouths to a collection well;
　　　c. coupling, preferably mechanically, the first ends of the pipes to the drain mouths.

Note that in the embodiment, the pipes are typically supported over their entire trajectory upon placement and lie downwardly inclined from the drain mouth to the collection well or hydrocarbon separator. The pipes are then connected and tested (to detect leaks), and then the pipes are filled in with pure sand, stabilised sand or lean concrete to protect the pipes well, after which the overlying soil layers are filled in, on which a foundation will be laid for the road, and then a paved surface layer is applied.

Coupling the pipes with the drain mouths in a mechanical manner ensures, as stated before, a large number of advantages over the known systems, which are coupled via electrofusion, and often with a large number of couplings between pieces of pipe. Of course, all the advantages already mentioned of the drainage system itself and the kit also apply to the method of placing these.

In a preferred embodiment of the method according to the third aspect, the drainage system further comprises one or more connection sleeves, and wherein the connection sleeves comprise substantially polyethylene, and are adapted for mechanically and liquid-tight coupling of the pipes to the drain mouths. Alternatively or additionally, the connection sleeves may comprise polyamide, preferably polyamide 6 (PA 6), and are adapted for mechanically and liquid-tight coupling of the pipes to the drain mouths.

Alternatively, the system can also be used as a secondary tube around a primary tube that transports liquids.

In what follows, the invention will be described by way of non-limiting examples illustrating the invention, and which are not intended to and should not be interpreted as limiting the scope of the invention.

In general it should be noted that the inventor noticed a remarkable improvement when comparing prototype pipes according to the invention, which are mainly composed of PA6, compared to known polyethylene pipes. Testing also showed that the PA6 pipes were much less deformed after contact with and under the influence of hydrocarbon-containing liquids (diesel according to EN590 and petrol according to EN228) than PE pipes, both in terms of thickness and diameter, and even in mass. The permeability of the prototype pipes is much lower than that of PE pipes. Because the PA6 pipes deform minimally, leakage will therefore occur much less, than is the case with standard PE pipes (PE 80 or PE 100 for example).

EXAMPLES

EXAMPLE 1:

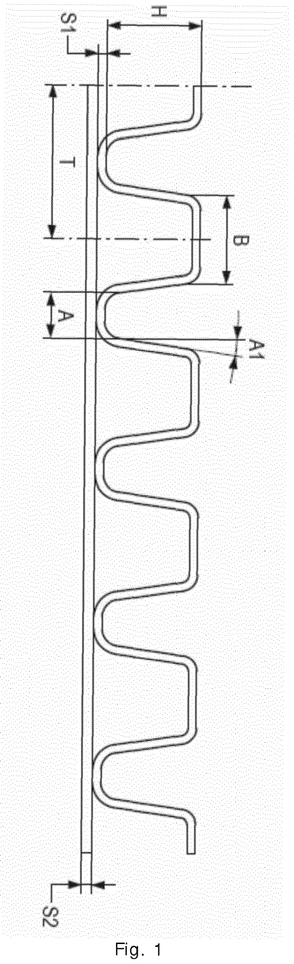

In a first Fig. 1, a section is shown of the double-layered wall of an embodiment of a pipe of the drainage system according to the invention. The inner layer has a substantially smooth inside for optimum flow of the collected contaminated water. As indicated, the drainage system is positioned in such a way that the pipes run down from the drain mouth to the collection well and thus create a natural flow. Preferably, this run-off is very gradual and there is only a limited height difference over the path, so that it is not necessary to dig excessively deep during installation. The outer layer is ribbed. The relief depth is indicated as 'H' and further ensures the flexibility. The distance between the ribs (centre to centre) is indicated as 'T'. The outer layer has a thickness 'S1', the inner layer has a thickness 'S2'. Finally, the ribs themselves have a width 'B' and an intermediate rib distance 'A'. The slope under which the ribs stand up is indicated as 'A1' and can vary greatly. Note that the term 'ribs' is used herein, but that it may equally well involve waves, depending on the form.

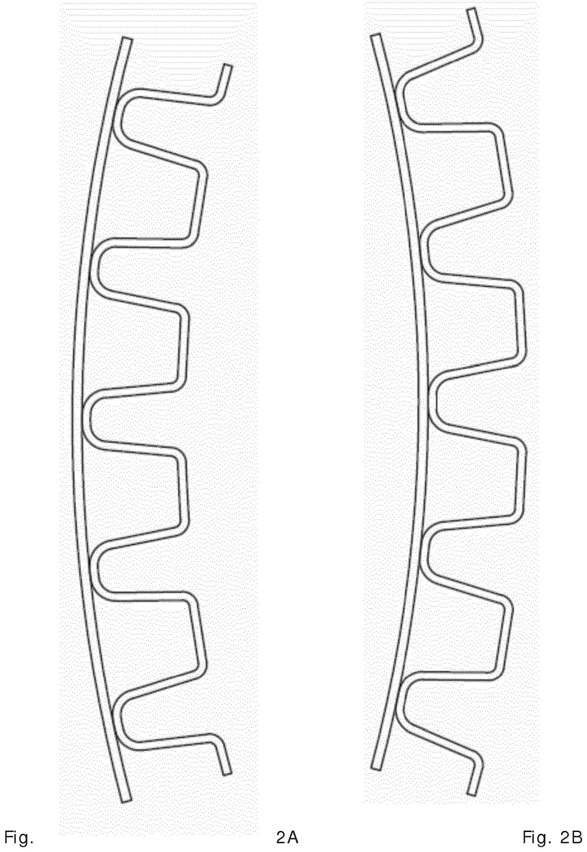

As can be seen in Fig. 2A and 2B, the ribbed (or corrugated) structure allows the pipe to be slightly bent in order to follow a desired trajectory. Moreover, this makes it easy to connect the pipes to a collection well, which are equipped as standard with a number of connections under a specific configuration. When working with rigid pipes, a complete construction (with a number of bends and therefore couplings via electrofusion) often has to be set up in order to correctly align the pipes with the connections of the collection well (which are usually oriented outwards around the collection well under different angles). Due to the flexible pipes of the invention, this is done in a much simpler manner. Note that this advantage is not limited to pipes with the ribbed or corrugated structure but applies to all flexible pipes according to the invention.

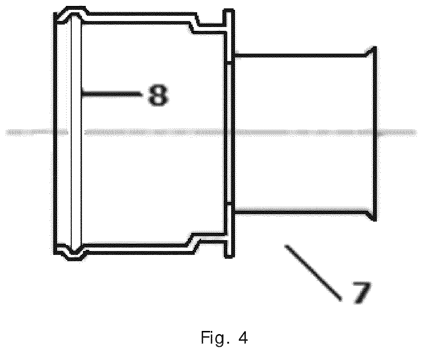

Furthermore, Fig. 4 shows an example of a connection sleeve (7) with ends of a different diameter, for example 110 mm and 160 mm (note that equal diameters are also possible), to be connected to a drain mouth or collection well on the one hand and on a pipe on the other. The ends of the connection sleeves are preferably female couplings, and thus suitable for receiving the pipe or a coupling piece (tube) from the drain mouth or collection well. As can be seen in the figures, a sealing rubber (8) is provided on the side for coupling to the drain mouth or collection well (or to other elements except the pipe) and is attached to the inside of the connecting sleeve (as can be seen, a special recess is even made around the inside of the connection sleeve to ensure that the sealing rubber is not moved). In this way a liquid-tight coupling is ensured with the coupling piece of the drain mouth or collection well when it is fully inserted in this. At the other end of the connection sleeve, for coupling to the pipes, a sealing rubber is often not provided because it can be more easily attached to the (ribbed) outside of the pipes.

EXAMPLE 2:

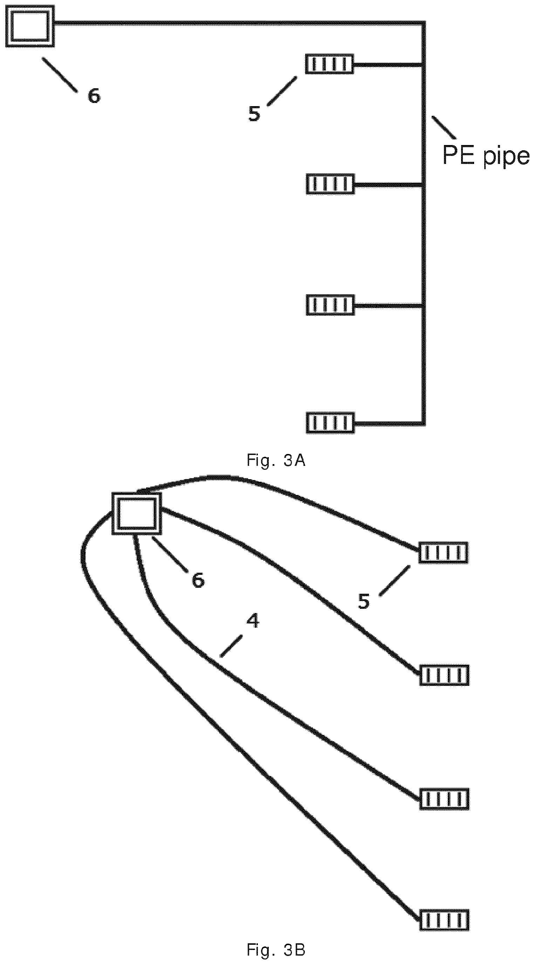

Fig. 3A and 3B show a floor plan of a drainage system for a petrol station, Fig. 3A according to an old system, Fig. 3B according to the system of the invention. It is clearly visible that with the old system a large number of bends are present, where typically electrofusion couplings must always be provided, with the known drawbacks. In addition, it also appears that a greatly increased path length is necessary for the connection of the drain mouths (5) with the collection well (6). It should also be borne in mind that the (polyethylene) pipes of the old system are only available in standard lengths and that there are therefore many losses due to cut pieces.

The system according to the invention can simply be arranged via coils or reels, in which the pipes (4) are rolled off of the coils or reels to a desired length, after which this length can be cut off and the rest of the coil, roll or reel can be used for other pieces of piping, and thus many less undesirable remainders will be left over. Note that the pipes (4) can also be supplied without coil or reel (rolled up or in other forms).

The present invention should not be construed as being limited to the embodiments described above and certain modifications or changes may be added to the examples described without having to re-evaluate the appended claims. For example, the present invention has been described with reference to drainage systems for petrol stations, but it should be understood that the invention can be applied to e.g. chemical plants or water treatment plants or to groundwater and/or water remediation.

**Claims**

1. Drainage system for discharging hydrocarbon-contaminated wastewater, comprising one or more elongate pipes (4) and one or more drain mouths (5) for collecting hydrocarbon-contaminated wastewater, wherein a first end of the pipes (4) can be connected in a liquid-tight manner to the drain mouths (5) for discharging the contaminated wastewater, the pipes (4) being flexible, and the pipes (4) having a bend radius comprised between 4 and 15 times the nominal diameter of the pipes (4); and wherein the pipes (4) comprise polyamide and/or high-density polyethylenes, polyurethanes, polybutylenes, polyphenylenes, polyoxymethyls, ethylene/vinyl alcohol copolymers and/or combinations and/or copolymers of the aforementioned; and wherein the pipes (4) have an inner diameter comprised between 70 mm and 200 mm, and the pipes (4) have a total wall thickness of at least 1 mm and at most 20 mm.

2. Drainage system according to the preceding claim 1, wherein the pipes (4) comprise polyamide 6 (PA 6).

3. Drainage system according to the preceding claim 1 or 2, in which the pipes (4) comprise an inner layer and an outer layer which are obtained via coextrusion, the inner layer and the outer layer being directly bonded to each other.

4. Drainage system according to claim 3, the outer layer of the pipes (4) having a ribbed or corrugated outside, and the inner layer of the pipes (4) having a substantially smooth inner side, preferably wherein the ribbed or corrugated outside has a relief depth between 2 mm and 15 mm, more preferably between 5 mm and 11 mm, and even more preferably about 7 mm.

5. Drainage system according to any of the preceding claims 1 to 3, wherein the pipes (4) at the first end can be connected to the drain mouths (5) via a mechanical coupling, preferably wherein the pipes (4) have a ribbed or corrugated outside and the mechanical coupling engages by clamping on the ribbed or corrugated outside of the pipes (4).

6. Drainage system according to any of the preceding claims 1 to 5, further comprising one or more collection wells (6), the collection wells (6) being adapted for being liquid-tightly connected to a second end of the pipes (4), the collection wells (6) being adapted for receiving the contaminated wastewater, and wherein the pipes (4) are arranged sloping downwards from the drain mouths (5) to the collection wells (6), preferably wherein the pipes (4) can be connected liquid-tightly to the collection wells (6) via connection sleeves (7), preferably with the aid of clamping rings and/or sealing rubbers (8), the connection sleeves (7) further preferably comprising polyethylene and/or polyamide.

7. Drainage system according to any of the preceding claims 1 or 2, wherein the pipes (4) comprise an inner layer and an outer layer, and wherein the inner layer has a thickness comprised between 0.3 mm and 1.5 mm, preferably between 0.6 mm and 1.1 mm, and more preferably between 0.7 mm and 0.9 mm; and wherein the outer layer has a thickness comprised between 0.3 mm and 1.5 mm, preferably between 0.6 mm and 1.1 mm, and more preferably between 0.7 mm and 0.9 mm.

8. Drainage system according to any of the preceding claims 1 to 7, in which the pipes (4) are connected to the drain mouths (5) via connection sleeves (7) via a mechanical coupling, preferably by means of sealing rubbers (8) and/or clamping rings, and wherein the connection sleeves (7) preferably comprise polyamide, more preferably polyamide 6 (PA 6).

9. Kit for installing a drainage system for discharging hydrocarbon-contaminated wastewater, comprising one or more flexible pipes (4) and one or more drain mouths (5), the pipes (4) comprising an inner layer and an outer layer which can be obtained via coextrusion, with the inner and the outer layer being directly bonded to each other, with the outer layer of the pipes (4) having a ribbed or corrugated outside, and the inner layer of the pipes (4) having a substantially smooth inside and the pipes (4) comprising polyamide, preferably polyamide 6 (PA 6), and where the drain mouths (5) are suitable for collecting hydrocarbon-contaminated wastewater, where a first end of the pipes (4) and the drain mouths (5) are adapted to be connected to each other in a liquid-tight manner for discharging the wastewater from the drain mouths (5) through the pipes (4), further optionally comprising one or more connection sleeves (7) for engaging the ribbed or corrugated outside of the pipes (4) and the liquid-tight connecting of the first ends of the pipes (4) to the drain mouths (5) via a mechanical coupling, and **characterized in that** the flexible pipes (4) are pipes (4) as being part of the drainage system according to any of claims 1 to 8.

10. Kit according to the preceding claim 9, further comprising one or more collection wells (6) adapted to being liquid-tightly connected to a second end of the pipes (4) for discharging the contaminated wastewater from the pipes (4) to the collection well (6).

11. Method for installing a drainage system for discharging hydrocarbon-contaminated wastewater in petrol stations, industrial estates and/or fuel depots, said drainage system being installed in conjunction with a hydrocarbon separator, wherein the drainage system comprises one or more flexible pipes (4) and one or more drain mouths (5), the pipes (4) comprising an inner layer and an outer layer which can be obtained via coextrusion, with the inner and the outer layer being directly bonded to each other, with the outer layer of the pipes (4) having a ribbed or corrugated outside, and the inner layer of the pipes (4) having a substantially smooth inside and the pipes (4) comprising polyamide, preferably polyamide 6 (PA 6), and where the drain mouths (5) are suitable for collecting the contaminated wastewater, where a first end of the pipes (4) and the drain mouths (5) are adapted to be connected to each other in a liquid-tight manner for discharging the wastewater from the drain mouths (5) through the pipes (4), and **characterized in that** the flexible pipes (4) are pipes (4) as being part of the drainage system according to any of claims 1 to 8, comprising the following steps:

> a. placing the drain mouths (5) in excavated soil;
> b. placing the flexible pipes (4) in the excavated soil, the flexible pipes (4) extending from the drain mouths (5) to a collection well (6);
> c. coupling, preferably mechanically, the first ends of the pipes (4) to the drain mouths (5).

**12.** Method according to claim 11 for installing a drainage system for discharging hydrocarbon-contaminated wastewater, said drainage system being according to any of the preceding claims 1 to 8, wherein the drainage system further comprises one or more connection sleeves (7), the connection sleeves (7) comprising substantially polyamide, preferably polyamide 6 (PA 6), and being adapted for mechanically and liquid-tightly connecting the pipes (4) to the drain mouths (5).

**Patentansprüche**

**1.** Drainagesystem zum Ableiten von mit Kohlenwasserstoff kontaminiertem Abwasser, eine oder mehrere langgestreckte Rohrleitungen (4) und eine oder mehrere Drainierungsmündungen (5) zum Sammeln von mit Kohlenwasserstoff kontaminiertem Abwasser umfassend, wobei ein erstes Ende der Rohrleitungen (4) in einer flüssigkeitsdichten Weise an die Drainierungsmündungen (5) angeschlossen sein kann, um das kontaminierte Abwasser abzuleiten, wobei die Rohrleitungen (4) flexibel sind und die Rohrleitungen (4) einen Biegeradius aufweisen, der zwischen dem 4- und dem 15-Fachen des nominalen Durchmessers der Rohrleitungen (4) beträgt, und wobei die Rohrleitungen (4) Polyamid und/oder hochdichte Polyethylene, Polyurethane, Polybutyle-

ne, Polyphenylene, Polyoxymethyle, Ethylen-Vinyl-alcohol-Copolymere und/oder Kombinationen des zuvor Genannten umfassen, und wobei die Rohrleitungen (4) einen Innendurchmesser aufweisen, der zwischen 70 mm und 200 mm beträgt, und die Rohrleitungen (4) eine Gesamtwandstärke von mindestens 1 mm und höchstens 20 mm aufweisen.

**2.** Drainagesystem nach dem vorhergehenden Anspruch 1, wobei die Rohrleitungen (4) Polyamid 6 (PA 6) umfassen.

**3.** Drainagesystem nach dem vorhergehenden Anspruch 1 oder 2, wobei die Rohrleitungen (4) eine innere Schicht und eine äußere Schicht umfassen, die mittels Koextrusion erzielt sind, wobei die innere Schicht und die äußere Schicht direkt aneinander gebunden sind.

**4.** Drainagesystem nach dem vorhergehenden Anspruch 3, wobei die äußere Schicht der Rohrleitungen (4) eine gerippte oder geriffelte Außenseite aufweist und die innere Schicht der Rohrleitungen (4) eine im Wesentlichen glatte Innenseite aufweist, wobei die gerippte oder geriffelte Außenseite vorzugsweise eine Relieftiefe zwischen 2 mm und 15 mm aufweist, bevorzugter zwischen 5 mm und 11 mm und noch bevorzugter von etwa 7 mm.

**5.** Drainagesystem nach einem der vorhergehenden Ansprüche 1 bis 3, wobei die Rohrleitungen (4) an dem ersten Ende mittels einer mechanischen Kopplung mit den Drainierungsmündungen (5) verbunden sein können, wobei die Rohrleitungen (4) vorzugsweise eine gerippte oder geriffelte Außenseite aufweisen und die mechanische Kopplung durch Festklemmen auf der gerippten oder geriffelten Außenseite der Rohrleitungen (4) in Eingriff gelangt.

**6.** Drainagesystem nach einem der vorhergehenden Ansprüche 1 bis 5, ferner einen oder mehrere Sammelschächte (6) umfassend, wobei die Sammelschächte (6) dafür eingerichtet sind, flüssigkeitsdicht mit einem zweiten Ende der Rohrleitungen (4) verbunden zu sein, wobei die Sammelschächte (6) dafür eingerichtet sind, das kontaminierte Abwasser aufzunehmen, und wobei die Rohrleitungen (4) dafür eingerichtet sind, sich von den Drainierungsmündungen (5) abwärts zu den Sammelschächten (6) zu neigen, wobei die Rohrleitungen (4) vorzugsweise mittels Verbindungshülsen (7) flüssigkeitsdicht mit den Sammelschächten (6) verbunden sein können, vorzugsweise mit Hilfe von Klemmringen und/oder Dichtungsgummis (8), wobei die Verbindungshülsen (7) ferner vorzugsweise Polyethylen und/oder Polyamid umfassen.

**7.** Drainagesystem nach einem der vorhergehenden Ansprüche 1 oder 2, wobei die Rohrleitungen (4) eine innere Schicht und eine äußere Schicht umfassen und wobei die innere Schicht eine Stärke zwischen 0,3 mm und 1,5 mm aufweist, vorzugsweise zwischen 0,6 mm und 1,1 mm und bevorzugter zwischen 0,7 mm und 0,9 mm aufweist und wobei die äußere Schicht eine Stärke zwischen 0,3 mm und 1,5 mm, vorzugsweise zwischen 0,6 mm und 1,1 mm und bevorzugter zwischen 0,7 mm und 0,9 mm aufweist.

8. Drainagesystem nach einem der vorhergehenden Ansprüche 1 bis 7, wobei die Rohrleitungen (4) mittels Verbindungshülsen (7) mittels mechanischer Kopplung mit den Drainierungsmündungen (5) verbunden sind, vorzugsweise mittels Dichtungsgummis (8) und/oder Klemmringen, und wobei die Verbindungshülsen (7) vorzugsweise Polyamid umfassen, bevorzugter Polyamid 6 (PA 6).

9. Bausatz zum Installieren eines Drainagesystems zum Ableiten von mit Kohlenwasserstoff kontaminiertem Abwasser, eine oder mehrere flexible Rohrleitungen (4) und eine oder mehrere Drainierungsmündungen (5) umfassend, wobei die Rohrleitungen (4) eine innere Schicht und eine äußere Schicht umfassen, die mittels Koextrusion erzielt sein können, wobei die innere Schicht und die äußere Schicht direkt aneinander gebunden sind, wobei die äußere Schicht der Rohrleitungen (4) eine gerippte oder geriffelte Außenseite aufweist und die innere Schicht der Rohrleitungen (4) eine im Wesentlichen glatte Innenseite aufweist und die Rohrleitungen (4) Polyamid umfassen, vorzugsweise Polyamid 6 (PA 6), und wobei die Drainierungsmündungen (5) dazu geeignet sind, mit Kohlenwasserstoff kontaminiertes Abwasser zu sammeln, wobei ein erstes Ende der Rohrleitungen (4) und die Drainierungsmündungen (5) dafür eingerichtet sind, in einer flüssigkeitsdichten Weise miteinander verbunden zu sein, um das Abwasser von den Drainierungsmündungen (5) durch die Rohrleitungen (4) abzuleiten, ferner optional eine oder mehrere Verbindungshülsen (7) zum Eingriff mit der gerippten oder geriffelten Außenseite der Rohrleitungen (4) und die flüssigkeitsdichte Verbindung der ersten Enden der Rohrleitungen (4) mit den Drainierungsmündungen (5) mittels einer mechanischen Kopplung umfassend, und **dadurch gekennzeichnet, dass** die flexiblen Rohrleitungen (4) Rohrleitungen (4) als Teil des Drainagesystems nach einem der vorhergehenden Ansprüche 1 bis 8 sind.

10. Bausatz nach dem vorhergehenden Anspruch 9, ferner einen oder mehrere Sammelschächte (6) umfassend, die dafür eingerichtet sind, flüssigkeitsdicht mit einem zweiten Ende der Rohrleitungen (4) verbunden zu sein, um das kontaminierte Abwasser von den Rohrleitungen (4) zu dem Sammelschacht (6) abzuleiten.

11. Verfahren zum Installieren eines Drainagesystems zum Ableiten von mit Kohlenwasserstoff kontaminiertem Abwasser in Tankstellen, Industriegebieten und/oder Kraftstofflagern, wobei das Drainagesystem in Verbindung mit einem Kohlenwasserstoffabscheider installiert wird, wobei das Drainagesystem eine oder mehrere flexible Rohrleitungen (4) und eine oder mehrere Drainierungsmündungen (5) umfasst, wobei die Rohrleitungen (4) eine innere Schicht und eine äußere Schicht umfassen, die mittels Koextrusion erzielt werden können, wobei die innere und die äußere Schicht direkt aneinander gebunden werden, wobei die äußere Schicht der Rohrleitungen (4) eine gerippte oder geriffelte Außenseite aufweist und die innere Schicht der Rohrleitungen (4) eine im Wesentlichen glatte Innenseite aufweist und die Rohrleitungen (4) Polyamid umfassen, vorzugsweise Polyamid 6 (PA 6), und wobei die Drainierungsmündungen (5) dazu geeignet sind, das kontaminierte Abwasser zu sammeln, wobei ein erstes Ende der Rohrleitungen (4) und die Drainierungsmündungen (5) dafür eingerichtet sind, in einer flüssigkeitsdichten Weise miteinander verbunden zu werden, um das Abwasser aus den Drainierungsmündungen (5) durch die Rohrleitungen (4) abzuleiten, und **dadurch gekennzeichnet, dass** die flexiblen Rohrleitungen (4) Rohrleitungen (4) als Teil des Drainagesystems nach einem der vorhergehenden Ansprüche 1 bis 8 sind, die folgenden Schritte umfassend:

    a. Platzieren der Drainierungsmündungen (5) in ausgebaggertem Boden,
    b. Platzieren der flexiblen Rohrleitungen (4) in dem ausgebaggerten Boden, wobei sich die flexiblen Rohrleitungen (4) von den Drainierungsmündungen (5) zu einem Sammelschacht (6) erstrecken,
    c. Koppeln, vorzugsweise mechanisch, der ersten Enden der Rohrleitungen (4) mit den Drainierungsmündungen (5).

12. Verfahren nach Anspruch 11 zum Einbauen eines Drainagesystems zum Ableiten von mit Kohlenwasserstoff kontaminiertem Abwasser, wobei das Drainagesystem nach einem der vorhergehenden Ansprüche 1 bis 8 ist, wobei das Drainagesystem ferner eine oder mehrere Verbindungshülsen (7) umfasst, wobei die Verbindungshülsen (7) im Wesentlichen Polyamid umfassen, vorzugsweise Polyamid 6 (PA 6), und dafür eingerichtet sind, die Rohrleitungen (4) mechanisch und flüssigkeitsdicht mit den Drainierungsmündungen (5) zu verbinden.

**Revendications**

1. Système de drainage pour évacuer de l'eau résiduaire contaminée par des hydrocarbures, comprenant un ou plusieurs tuyaux (4) allongés et une ou plusieurs embouchures de drainage (5) pour collecter de l'eau résiduaire contaminée par des hydrocarbures, dans lequel une première extrémité des tuyaux (4) peut être raccordée de manière étanche aux liquides aux embouchures de drainage (5) pour évacuer l'eau résiduaire contaminée, les tuyaux (4) étant flexibles, et les tuyaux (4) ayant un rayon de courbure compris entre 4 et 15 fois le diamètre nominal des tuyaux (4) ; et dans lequel les tuyaux (4) comprennent du polyamide et/ou des polyéthylènes haute densité, des polyuréthanes, des polybutylènes, des polyphénylènes, des polyoxyméthyles, des copolymères d'éthylène/alcool vinylique et/ou des combinaisons et/ou des copolymères des susmentionnés ; et dans lequel les tuyaux (4) ont un diamètre interne compris entre 70 mm et 200 mm, et les tuyaux (4) ont une épaisseur de paroi totale d'au moins 1 mm et d'au plus 20 mm.

2. Système de drainage selon la revendication 1 précédente, dans lequel les tuyaux (4) comprennent du polyamide 6 (PA 6).

3. Système de drainage selon la revendication 1 ou 2 précédente, dans lequel les tuyaux (4) comprennent une couche interne et une couche externe qui sont obtenues par coextrusion, la couche interne et la couche externe étant directement liées l'une à l'autre.

4. Système de drainage selon la revendication 3, la couche externe des tuyaux (4) ayant un extérieur nervuré ou ondulé, et la couche interne des tuyaux (4) ayant un côté interne sensiblement lisse, de préférence dans lequel l'extérieur nervuré ou ondulé a une profondeur de relief entre 2 mm et 15 mm, de manière davantage préférée entre 5 mm et 11 mm, et de manière encore davantage préférée d'environ 7 mm.

5. Système de drainage selon l'une quelconque des revendications 1 à 3 précédentes, dans lequel les tuyaux (4) au niveau de la première extrémité peuvent être raccordés aux embouchures de drainage (5) par un couplage mécanique, de préférence dans lequel les tuyaux (4) ont un extérieur nervuré ou ondulé et le couplage mécanique vient en prise par serrage sur l'extérieur nervuré ou ondulé des tuyaux (4).

6. Système de drainage selon l'une quelconque des revendications 1 à 5 précédentes, comprenant en outre un ou plusieurs puits de collecte (6), les puits de collecte (6) étant adaptés pour être raccordés de manière étanche aux liquides à une seconde extrémité des tuyaux (4), les puits de collecte (6) étant adaptés pour recevoir l'eau résiduaire contaminée, et dans lequel les tuyaux (4) sont agencés en pente vers le bas à partir des embouchures de drainage (5) vers les puits de collecte (6), de préférence dans lequel les tuyaux (4) peuvent être raccordés de manière étanche aux liquides aux puits de collecte (6) par des manchons de raccordement (7), de préférence à l'aide de bagues de serrage et/ou de caoutchoucs d'étanchéité (8), les manchons de raccordement (7) comprenant en outre de préférence du polyéthylène et/ou du polyamide.

7. Système de drainage selon l'une quelconque des revendications 1 ou 2 précédentes, dans lequel les tuyaux (4) comprennent une couche interne et une couche externe, et dans lequel la couche interne a une épaisseur comprise entre 0,3 mm et 1,5 mm, de préférence entre 0,6 mm et 1,1 mm, et de manière davantage préférée entre 0,7 mm et 0,9 mm ; et dans lequel la couche externe a une épaisseur comprise entre 0,3 mm et 1,5 mm, de préférence entre 0,6 mm et 1,1 mm, et de manière davantage préférée entre 0,7 mm et 0,9 mm.

8. Système de drainage selon l'une quelconque des revendications 1 à 7 précédentes, dans lequel les tuyaux (4) sont raccordés aux embouchures de drainage (5) par des manchons de raccordement (7) par un couplage mécanique, de préférence au moyen de caoutchoucs d'étanchéité (8) et/ou de bagues de serrage, et dans lequel les manchons de raccordement (7) comprennent de préférence du polyamide, de manière davantage préférée du polyamide 6 (PA 6).

9. Kit pour installer un système de drainage pour évacuer de l'eau résiduaire contaminée par des hydrocarbures, comprenant un ou plusieurs tuyaux (4) flexibles et une ou plusieurs embouchures de drainage (5), les tuyaux (4) comprenant une couche interne et une couche externe qui peuvent être obtenues par coextrusion, avec la couche interne et externe étant directement liées l'une à l'autre, avec la couche externe des tuyaux (4) ayant un extérieur nervuré ou ondulé, et la couche interne des tuyaux (4) ayant un intérieur sensiblement lisse et les tuyaux (4) comprenant du polyamide, de préférence du polyamide 6 (PA 6), et où les embouchures de drainage (5) sont appropriées pour collecter de l'eau résiduaire contaminée par des hydrocarbures, où une première extrémité des tuyaux (4) et les embouchures de drainage (5) sont adaptées pour être raccordées les unes aux autres de manière étanche aux liquides pour évacuer l'eau résiduaire à partir des embouchures de drainage (5) à travers les tuyaux (4), comprenant optionnellement en outre un ou plusieurs manchons de raccordement (7) pour mettre en prise l'extérieur nervuré ou ondulé des tuyaux (4) et le raccord étanche aux liquides des premières extrémités des tuyaux (4) aux embouchures de drainage (5) par un couplage mécanique, et **caractérisé en ce que** les tuyaux (4) flexibles sont des tuyaux (4) faisant partie du système de drainage selon l'une quelconque des revendications 1 à 8.

**10.** Kit selon la revendication 9 précédente, comprenant en outre un ou plusieurs puits de collecte (6) adaptés pour être raccordés de manière étanche aux liquides à une seconde extrémité des tuyaux (4) pour évacuer l'eau résiduaire contaminée à partir des tuyaux (4) vers les puits de collecte (6).

**11.** Procédé pour installer un système de drainage pour évacuer de l'eau résiduaire contaminée par des hydrocarbures dans des stations de pompage, des complexes industriels et/ou des dépôts de carburant, ledit système de drainage étant installé conjointement avec un séparateur d'hydrocarbures, dans lequel le système de drainage comprend un ou plusieurs tuyaux (4) flexibles et une ou plusieurs embouchures de drainage (5), les tuyaux (4) comprenant une couche interne et une couche externe qui peuvent être obtenues par coextrusion, avec la couche interne et externe étant directement liées l'une à l'autre, avec la couche externe des tuyaux (4) ayant un extérieur nervuré ou ondulé, et la couche interne des tuyaux (4) ayant un intérieur sensiblement lisse et les tuyaux (4) comprenant du polyamide, de préférence du polyamide 6 (PA 6), et où les embouchures de drainage (5) sont appropriées pour collecter l'eau résiduaire contaminée, où une première extrémité des tuyaux (4) et les embouchures de drainage (5) sont adaptées pour être raccordées les unes aux autres de manière étanche aux liquides pour évacuer l'eau résiduaire à partir des embouchures de drainage (5) à travers les tuyaux (4), et **caractérisé en ce que** les tuyaux (4) flexibles sont des tuyaux (4) faisant partie du système de drainage selon l'une quelconque des revendications 1 à 8, comprenant les étapes suivantes :

    a. mise en place des embouchures de drainage (5) dans un sol excavé ;
    b. mise en place des tuyaux (4) flexibles dans le sol excavé, les tuyaux (4) flexibles s'étendant à partir des embouchures de drainage (5) vers un puits de collecte (6) ;
    c. couplage, de préférence de manière mécanique, des premières extrémités des tuyaux (4) aux embouchures de drainage (5).

**12.** Procédé selon la revendication 11 pour installer un système de drainage pour évacuer de l'eau résiduaire contaminée par des hydrocarbures, ledit système de drainage étant selon l'une quelconque des revendications 1 à 8 précédentes, dans lequel le système de drainage comprend en outre un ou plusieurs manchons de raccordement (7), les manchons de raccordement (7) comprenant sensiblement du polyamide, de préférence du polyamide 6 (PA 6), et étant adaptés pour raccorder mécaniquement et de manière étanche aux liquides les tuyaux (4) aux embouchures de drainage (5).

Fig. 1

14

Fig. 2A          Fig. 2B

6

5

PE pipe

Fig. 3A

6

5

4

Fig. 3B

Fig. 4

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 1103752 A
- EP 0648901 A
- FR 1405229